# EUROPEAN PATENT APPLICATION

(11) **EP 3 767 804 A1**
(43) Date of publication of application: **20.01.2021**
(21) Application number: 19187297.7
(22) Date of filing: 19.07.2019
(51) Int. Cl.: H02K 7/08, F16C 35/073, H01R 39/14, H02K 13/00

(54) **ELECTRIC GENERATOR**

(71) Applicant: Mahle International GmbH, 70376 Stuttgart (DE)
(72) Inventor: BERCE, Mitja, 5270 Ajdovscina (SI); TUREL, Ales, 5290 Sempeter pri Gorici (SI)
(74) Representative: BRP Renaud & Partner mbB Rechtsanwälte Patentanwälte Steuerberater

(57) **Abstract**

The invention relates to an electric generator (1), in particular an alternator (2) for a motor vehicle. The electric generator (1) has a rotor (3) and a stator, wherein the rotor (3) is non-rotatably fixed on a shaft (4) and one shaft end (6a) of the shaft (4) protrudes out of the rotor (3). An excitation coil (9) is arranged inside the rotor (3), wherein the excitation coil (9) can be brought into electrical contact with the outside by way of a slip-ring arrangement (29) with two slip rings (13, 14). The slip rings (13, 14) are fixed on the shaft end (6a, 6b) of the shaft (4) next to one another and spaced apart from one another. A bearing (23) is non-rotatably fixed on the shaft end (6a) of the shaft (4), wherein the shaft (4) with the rotor (3) is mounted rotatably about an axis of rotation (5) within the stator by the bearing (23). The bearing (23) is arranged at the shaft end (6a) between the rotor (3) and the slip rings (13, 14).

According to the invention, a thermally insulating protective layer (27) is arranged between the shaft (4) and the bearing (23). The protective layer (27) encapsulates the shaft (4) and thermally insulates the bearing (23) from the shaft (4), so that heat from the rotor (3) and from the shaft (4) cannot be passed on to the bearing (23).

The invention also relates to different methods for producing the electric generator (1).

## Description

The invention relates to an electric generator, in particular an alternator for a motor vehicle, according to the preamble of Claim 1. The invention also relates to a method for producing the electric generator.

Alternators for a motor vehicle are already known from the prior art. They have a stator and a rotor, which is non-rotatably fixed on a rotatable shaft. The rotor in this case comprises two claw poles, each with a number of claw pole teeth, which are arranged alternately on an outer circumference of the rotor. Arranged in the rotor, or between the two claw poles, is an excitation coil, so that a magnetic field can be generated around the rotor. The poles of the magnetic field are in this case assigned to the respective claw poles, so that the poles of the magnetic field alternate with the alternating claw pole teeth on the outer circumference of the rotor. When the rotor rotates, as a result an alternating current can be generated in electrical coils of the stator. Expediently, the shaft with the rotor is rotatably mounted within the stator by means of two bearings. In this case, the bearings are on the one hand fixed on the shaft and on the other hand fixed on the stator or on a rotationally fixed component part of the alternator. Usually, not only the bearings but also the rotor and the shaft consist of heat-conducting materials, so that the bearings are heated during the operation of the alternator. When the bearings are heated, their lifetime is shortened. Thus, for example, a 15°C increase in the operating temperature of the bearings leads to a 50% shortening of their lifetime.

The object of the invention is therefore to provide an improved or at least alternative embodiment for an electric generator of the generic type in which the disadvantages described are overcome. Furthermore, a method for producing the electric generator is to be provided.

These objects are achieved according to the invention by the subject matter of the independent claims. Advantageous embodiments are the subject of the dependent claims.

An electric generator, in particular an alternator for a motor vehicle, has a rotor and a stator. The rotor is in this case non-rotatably fixed on a shaft and one shaft end of the shaft protrudes out of the rotor. Arranged inside the rotor is an excitation coil, which can be brought into electrical contact with the outside by way of a slip-ring arrangement. The slip rings are in this case fixed on the shaft end of the shaft next to one another and spaced apart from one another. Also non-rotatably fixed on the shaft end of the shaft is a bearing, by which the shaft with the rotor is mounted within the stator rotatably about an axis of rotation. The bearing is in this case arranged at the shaft end between the rotor and the slip rings. According to the invention, a thermally insulating protective layer is arranged between the shaft and the bearing. The protective layer encapsulates - i.e. circumferentially surrounds - the shaft under the bearing and thermally insulates the bearing from the shaft, so that heat from the rotor and from the shaft cannot be passed on to the bearing. The thermally insulating protective layer advantageously allows the prevention of any heat transfer from the usually metal shaft to the usually metal bearing, so that the bearing heats up less during operation. In other words, the bearing is thermally decoupled from the shaft with the rotor. As a result, the operating temperature of the bearing can be reduced and, as a result, the lifetime of the bearing and of the electric generator can be increased.

The rotor may in this case comprise two claw poles, each with a number of claw pole teeth, which are arranged alternately on an outer circumference of the rotor. Arranged then in the rotor, or between the two claw poles, is the excitation coil, so that a magnetic field can be generated around the rotor. The poles of the magnetic field are in this case assigned to the respective claw poles and alternate with the alternating claw pole teeth on an outer circumference of the rotor. When the shaft with the rotor rotates, as a result an alternating current can be generated in electrical coils of the stator. Apart from the shaft end mentioned here, the shaft also has a second shaft end. The shaft end is in this case the so-called rear end of the shaft and the second shaft end is a so-called front end of the shaft. The two ends are arranged lying opposite one another and protrude out of the rotor in the same way. At the rear end, or at the shaft end, the excitation coil can be brought into electrical contact with the outside by way of the slip rings and at the front end, or at the second shaft end, the shaft can be coupled in a torque-transmitting manner to an external drive.

It may be advantageously provided that the slip-ring arrangement is electrically insulated from the shaft by an electrically insulating insulating element. The insulating element may in this case comprise an insulating cap and an insulating disc, which are connected to one another by way of two bridging portions. The insulating disc, the bridging portions and the insulating cap may be formed in one piece or integrally on one another. The insulating cap may advantageously encapsulate the shaft end under the electrically conducting slip rings, so that the slip rings are electrically insulated from the usually metal, and therefore electrically conducting, shaft. Advantageously, the slip rings may in this case be pressed on the insulating cap or on the insulating element. The insulating disc may in this case lie against the rotor and be fixed on it, so that the slip-ring arrangement is completely electrically insulated from the rotor. The bridging portions are then arranged within the shaft in two grooves aligned along the axis of rotation and connect the insulating cap and the insulating disc to one another. The bearing is then fixed above the bridging portions on the shaft and axially adjacent to the insulating disc.

Advantageously, the slip rings may be connected in an electrically conducting manner to the excitation coil by way of two electrical conductors, which are led within the insulating element along the axis of rotation. Expediently, the electrical conductors are connected in an electrically conducting manner to the assigned slip rings. The electrical conductors may in this case be led from the slip rings within the insulating cap and the bridging portions up to the insulating disc and protrude from the bridging portions adjacent to the insulating disc. At their protruding ends, the conductors can then be connected in an electrically conducting manner to electrical coil conductors of the excitation coil and as a result an electrical circuit can be formed from the excitation coil, the coil conductors, the conductors and the slip rings. The slip rings are in this case electrically insulated from one another by the insulating element and represent two external contacts, by which the circuit can be supplied with current or the excitation coil can be brought into electrical contact with the outside.

It may be advantageously provided that the electrically insulating insulating element and the thermally insulating protective layer consist of the same thermally and electrically insulating material and are of one part. The protective layer then lies above the bridging portions or completely represents them. Above the protective layer, the bearing is then fixed on the shaft end, the bearing being thermally insulated by the protective layer from the usually metal shaft. It may additionally be provided that the insulating element and the protective layer consist of plastic and are produced by a single plastics injection-moulding operation. In this advantageous way, the production of the insulating element and of the protective layer can be made easier.

In the case of an alternative embodiment, it may be provided that the protective layer is a separate protective ring, which is placed onto the shaft. The protective ring may for example consist of plastic. If an insulating element is provided in the electric generator, the protective ring may be fixed on the insulating element by ultrasonic welding or by friction welding. The protective layer then lies above the bridging portions and/or the insulating cap and is connected to them in a material-bonding manner by ultrasonic welding or by friction welding. Above the protective layer, the bearing is then fixed on the shaft end, the bearing being thermally insulated by the protective layer from the usually metal shaft. Advantageously, the insulating element and the protective ring may consist of the same thermally and electrically insulating material - preferably plastic. Alternatively, the protective ring and the insulating element may consist of different materials - preferably plastics.

As an alternative to ultrasonic welding or friction welding, it may be provided that the insulating element consists of plastic and is produced by a temporally first plastics injection-moulding operation. The protective ring may then also consist of plastic and be produced by a second plastics injection-moulding operation. In the second plastics injection-moulding operation, the protective ring may then be connected in a material-bonding manner to the insulating element. The second plastics injection-moulding operation is consequently an overmoulding with plastic of the insulating element. Advantageously, the insulating element and the protective ring may consist of the same thermally and electrically insulating plastic. Alternatively, the protective ring and the insulating element may consist of different plastics.

Advantageously, the protective layer may consist of a material that has a lower thermal conductivity than the material of the shaft. As a result, the usually metal shaft and the usually metal bearing can be thermally decoupled from one another. Advantageously, the protective layer may consist of a material that has a higher degree of damping than the material of the bearing and/or the shaft. As a result, vibrations occurring in the shaft and/or in the bearing can be at least partially damped in the protective layer and are not passed on to the bearing and/or to the shaft. As a result, the bearing, and consequently the stator, can be mechanically decoupled from the shaft, and as a result from the rotor.

In the case of an advantageous development of the solution according to the invention, it is provided that the shaft protrudes out of the rotor at a second shaft end opposite from the shaft end. Then there is non-rotatably fixed on the second shaft end a second bearing, by which the shaft with the rotor is mounted within the stator rotatably about the axis of rotation. Then there is arranged between the shaft and the second bearing a further thermally insulating protective layer. The further protective layer encapsulates the shaft and thermally insulates the second bearing from the shaft, so that heat from the rotor and from the shaft cannot be passed on to the second bearing. The further protective layer may in this case consist of plastic and be produced for example by overmoulding the shaft with plastic and be fixed on the latter. The further protective layer may take the form of a further separate protective ring and be placed on the shaft under the second bearing. The further protective layer allows the second bearing to be thermally decoupled from the shaft with the rotor. As a result, the operating temperature of the second bearing can be reduced and as a result the lifetime of the second bearing and of the electric generator can be increased. As already explained above, the second shaft end is in this case the so-called front end of the shaft.

The invention also relates to a method for producing the electric generator described above. In this case, the electrically insulating insulating element and the thermally insulating protective layer are fixed on the shaft end of the shaft.

Advantageously, the electrically insulating insulating element of plastic may be fixed on the shaft end of the shaft - for example by a press fit. The insulating element may in this case be produced in a temporally first plastics injection-moulding operation. Subsequently, the thermally insulating protective layer of plastic may be fixed on the insulating element in a material-bonding manner by a temporally second plastics injection-moulding operation. The second plastics injection-moulding operation is consequently an overmoulding with plastic of the insulating element or of the shaft with the insulating element.

Alternatively, the electrically insulating insulating element of plastic may be fixed on the shaft end of the shaft - for example by a press fit. The insulating element may in this case be produced in a temporally first plastics injection-moulding operation. Subsequently, the thermally insulating protective layer in the form of a separate protective ring may be fixed on the insulating element by ultrasonic welding or by friction welding. The protective ring may be produced from plastic in a plastics injection-moulding operation.

Alternatively, the electrically insulating insulating element and the thermally insulating protective layer may be produced from the same electrically and thermally insulating plastic by a single plastics injection-moulding operation.

Further important features and advantages of the invention will emerge from the subclaims, from the drawings and from the associated description of the figures on the basis of the drawings.

It goes without saying that the features mentioned above and those still to be explained below can be used not only in the respectively specified combination but also in other combinations or on their own without departing from the scope of the present invention.

Preferred exemplary embodiments of the invention are shown in the drawings and will be explained in greater detail in the following description, with identical designations relating to identical or similar or functionally identical components.

In the drawings, in each case schematically:
- Fig. 1: shows a view of an electric generator according to the invention;
- Fig. 2: shows a sectional view of the electric generator according to the invention at a shaft end;
- Fig. 3: shows a view of an insulating element and a protective layer in the electric generator according to the invention;
- Fig. 4 and 5: show sectional views of the insulating element and the protective layer at the shaft end in the electric generator according to the invention.

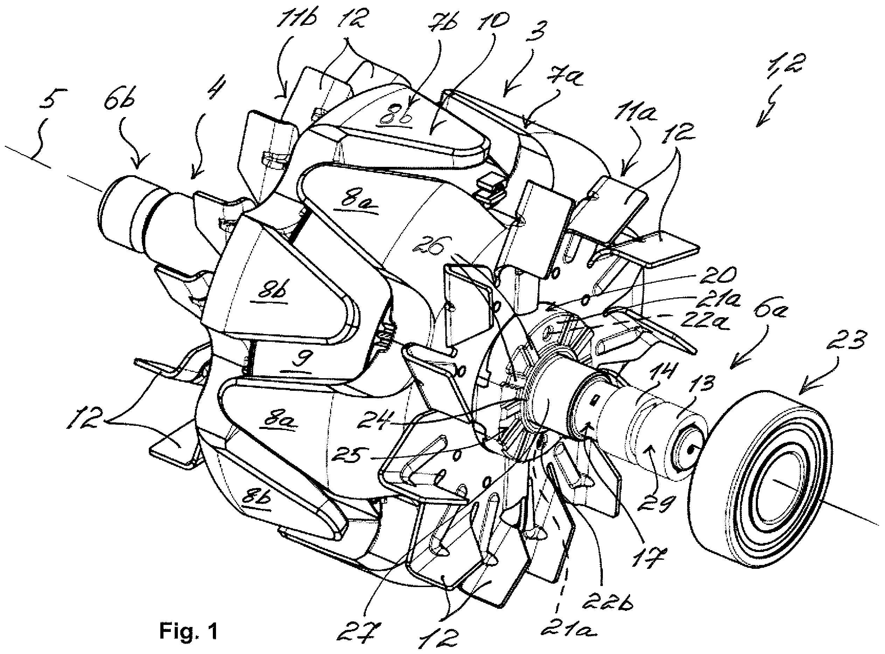

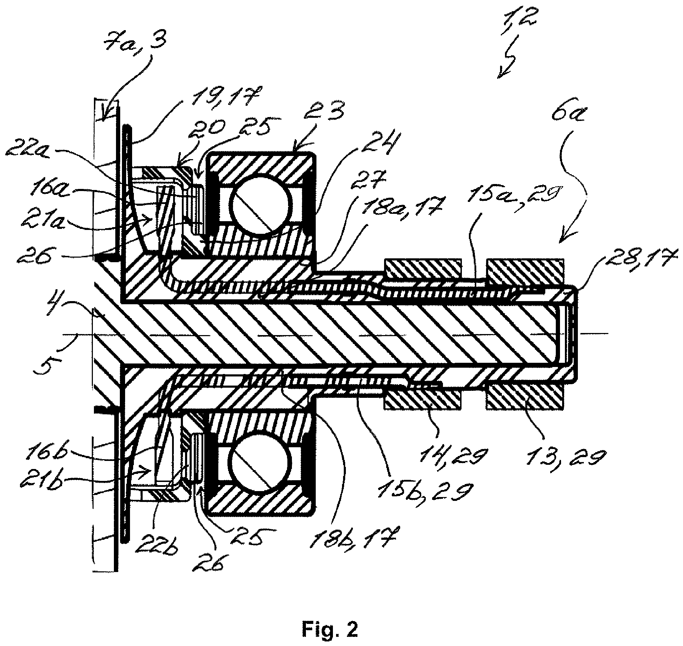

Fig. 1 shows a view and Fig. 2 shows a sectional view of an electric generator according to the invention 1 - here an alternator 2 for a motor vehicle. The electric generator 1 has in this case a stator - not shown here - and a rotor 3. The rotor 3 is non-rotatably fixed on a shaft 4, which is rotatable about an axis of rotation 5. Preferably, the rotor 3 is fixed on the shaft 4 by a press fit. The rotor 3 on the shaft 4 may be expediently received in the stator and rotatably mounted in the latter. The shaft 4 in this case protrudes out of the rotor 3 at a shaft end 6a and at a second shaft end 6b. The shaft end 6a is a so-called rear end of the shaft 4 and the second shaft end 6b is a so-called front end of the shaft 4. At the second shaft end 6b, the shaft 4 can be coupled in a torque-transmitting manner to an external drive. As a result, the shaft 4 can be driven by the rotor 3. The rotor 3 in this case comprises two claw poles 7a and 7b, each with a number of claw pole teeth 8a and 8b, and an excitation coil 9, which is enclosed on all sides by the claw poles 7a and 7b. The excitation coil 9 generates a magnetic field, the poles of which are respectively assigned to the claw poles 7a and 7b. As a result, the poles of the magnetic field alternate with the alternating claw pole teeth 8a and 8b on an outer circumference 10 of the rotor 3, so that, when the rotor 3 rotates, an alternating current can be generated in electrical coils of the stator - not shown here. Also fixed, preferably welded or pressed, on the rotor 3 are fan discs 11a and 11b. The respective fan discs 11a and 11b have in this case a number of blades 12.

The excitation coil 9 can be brought into electrical contact with the outside by way of two slip rings 13 and 14. The slip rings 13 and 14 are in this case fixed on the shaft end 6a next to one another and spaced apart from one another. With reference to Fig. 2, two electrical conductors 15a and 15b lead from the slip rings 13 and 14 to contact points 16a and 16b. The conductors 15a and 15b are preferably in electrical contact with the slip rings 13 and 14 by a press fit or welding. Here, the slip rings 13 and 14 and the conductors 15a and 15b form a slip-ring arrangement 29. At the contact points 16a and 16b, the conductors 15a and 15b are in electrical contact with coil conductors - not shown here - of the excitation coil 9, preferably are soldered to them. By way of the coil conductors, the conductors 15a and 15b and the slip rings 13 and 14, the excitation coil 9 can be brought into electrical contact with an external voltage source. The contact points 16a and 16b in this case protrude radially from the shaft 4 and are arranged such that they are turned by 180° in relation to one another about the axis of rotation 5.

The slip rings 13 and 14 and also the conductors 15a and 15b are electrically insulated from the shaft 4 by an insulating element 17. The insulating element 17 is preferably fixed on the shaft 4 by a press fit. The insulating element 17 has in this case an insulating cap 28, which encapsulates the shaft end 6a under the slip rings 13 and 14 and receives it axially. The conductors 15a and 15b are in this case led within the insulating cap 28 from the slip rings 13 and 14 along the shaft 4 to the excitation coil 9. The insulating cap 28 is also adjoined by two bridging portions 18a and 18b, which towards the rotor 3 go over into an insulating disc 19. At the insulating disc 19, the conductors 15a and 15b protrude radially from the bridging portions 18a and 18b, so that contact with the coil conductors of the excitation coil 9 is possible at the contact points 16a and 16b. The insulating disc 19 is aligned transverse to the axis of rotation 5 and on one side lies against the claw pole 7a of the rotor 3, so that the contact points 16a and 16b are isolated from the claw pole 7a.

An electrically insulating protective cover 20 is also non-rotatably fixed on the shaft end 6a of the shaft 4. The protective cover 20 is preferably fixed on the shaft 4 by a press fit. In this case, the protective cover 20 on one side lies against the insulating disc 19, so that the contact points 16a and 16b are received within the protective cover 20. Provided for this purpose in the protective cover 20 are receiving spaces 21a and 21b, which are open towards the insulating disc 19 and towards the shaft 4 and are closed by the latter. The contact points 16a and 16b are protected from surrounding influences by the protective cover 20. The protective cover 20 is also formed from an electrically insulating material - for example plastic -, so that the contact points 16a and 16b are additionally electrically insulated from the outside. The receiving spaces 21a and 21b are also open to the outside by way of two openings 22a and 22b, so that an electrically insulating potting compound can then be introduced into them. The potting compound may enclose or encapsulate the contact points 16a and 16b within the receiving spaces 21a and 21b on all sides, so that the contact points 16a and 16b dependably remain electrically insulated. The potting compound may advantageously be a silicone or an epoxy adhesive or any protective insulating material.

Also non-rotatably fixed on the shaft end 6 is a bearing 23 and on the second shaft end 6b is a further identical second bearing - though not visible here. Here, the bearing 23 is a rolling bearing and is preferably fixed on the shaft 4 by a press fit. The further bearing on the second shaft end 6b may be formed identically. The two bearings allow the shaft 4 with the rotor 3 to be rotatably mounted within the stator. In this case, the bearing 23 on one side lies against the protective cover 20, so that the protective cover 20 is arranged between the insulating disc 19 and the bearing 23. In this case, the protective cover 20 has facing the bearing 23 a spacing projection 24 of a constant axial height. The spacing projection 24 runs around the shaft 4 at a distance and fixes the bearing 23 at a defined distance in relation to the protective cover 20. In other words, a peripheral gap 25 of a constant axial height is formed by the spacing projection 24 between the bearing 23 and the protective cover 20. A number of radially outwardly directed cooling ribs 26 are also integrally formed on the protective cover 20 while facing the bearing 23. The cooling ribs 26 are consequently arranged in the peripheral gap 25 and can generate a pressing pressure during rotation of the shaft 4 with the rotor 3. As a result, the bearing 23 can be additionally cooled.

According to the invention, arranged between the shaft 4 and the bearing 23 is a thermally insulating protective layer 27, which encapsulates - i.e. circumferentially surrounds - the shaft 4 and thermally insulates the bearing 23 from the shaft 4. As a result, the transfer of heat between the shaft 4 with the rotor 3 and the bearing 23 can be interrupted, whereby the operating temperature of the bearing 23 is reduced and its lifetime is extended. In this exemplary embodiment, the protective layer 27 is formed in one piece with the insulating element 17. Expediently, the insulating element 17 and the protective layer 27 are then produced from an electrically and thermally insulating material. The insulating element 17 and the protective layer 27 may for example be produced from plastic in a single plastics injection-moulding operation.

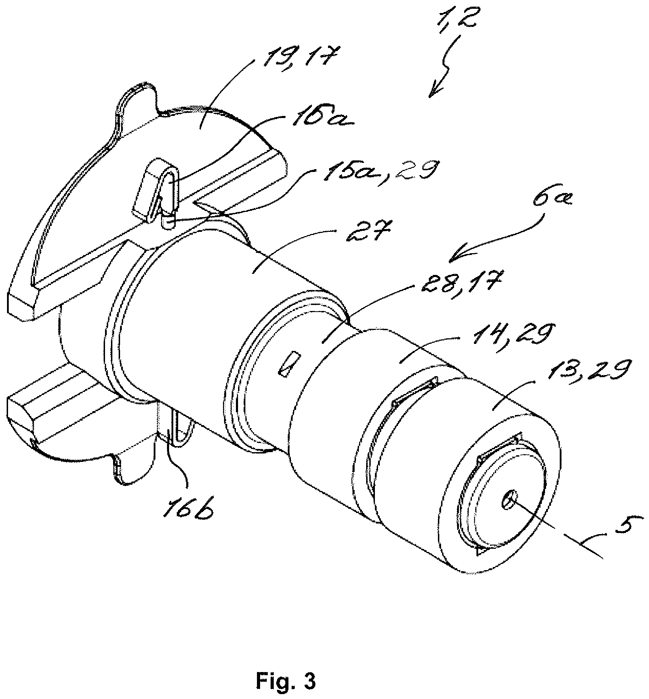

Fig. 3 shows a view of the insulating element 17 and the protective layer 27 in the electric generator 1 according to the invention. In the insulating element 17, the conductors 15a and 15b have already been received and the contact points 16a and 16b formed. The slip rings 13 and 14 have already been fixed on the insulating element 17 in the region of the insulating cap 28 and brought into electrical contact with the conductors 15a and 15b. As already explained above, the protective layer 27 is formed in one piece with the insulating element 17. The protective layer 27 is in this case arranged above the two bridging portions 18a and 18b and goes over axially into the insulating disc 19 and into the insulating cap 28 and radially into the two bridging portions 18a and 18b. The element shown here of the electric generator 1 is a separate structural unit in itself, which can be produced separately and then placed onto the shaft end 6a.

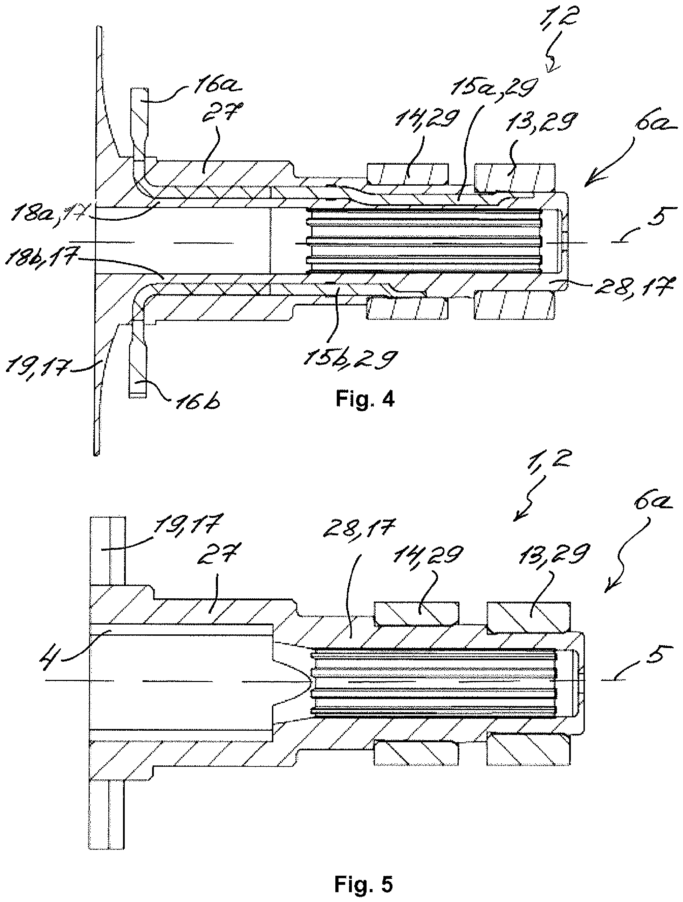

Fig. 4 and Fig. 5 show sectional views of the insulating element 17 and the protective layer 27, which have been placed onto the shaft end 6a of the shaft 4. Shown in Fig. 5 is the sectional view at the contact points 16a and 16b and shown in Fig. 5 is the sectional view outside the contact points 16a and 16b. As can be seen here, arranged under the contact points 16a and 16b are the bridging portions 18a and 18b, which are then integrally adjoined by the protective layer 27. The protective layer 27 in this case encapsulates the shaft 4 under the bearing 23, so that the bearing 23 - not shown here - is thermally insulated by the shaft 4. In other words, the insulating layer 27 also extends in the circumferential direction outside the bridging portions 18a and 18b. Axially, the protective layer 27 integrally adjoins the insulating cap 28 and the insulating disc 19, so that the shaft end 6a of the shaft 4 is completely covered or enclosed up to the rotor 3 by the insulating element 17 and the protective layer 27.

## Claims

1. Electric generator (1), in particular an alternator (2) for a motor vehicle, with a rotor (3) and a stator,
- wherein the rotor (3) is non-rotatably fixed on a shaft (4) and one shaft end (6a) of the shaft (4) protrudes out of the rotor (3),
- wherein an excitation coil (9) is arranged inside the rotor (3), wherein the excitation coil (9) can be brought into electrical contact with the outside via a slip-ring arrangement (29) with two slip rings (13, 14),
- wherein the slip rings (13, 14) are fixed on the shaft end (6a, 6b) of the shaft (4) next to one another and spaced apart from one another,
- wherein a bearing (23) is non-rotatably fixed on the shaft end (6a) of the shaft (4), wherein the shaft (4) with the rotor (3) is mounted rotatably about an axis of rotation (5) within the stator by the bearing (23), and
- wherein the bearing (23) is arranged at the shaft end (6a) between the rotor (3) and the slip rings (13, 14),
**characterized**
**in that** a thermally insulating protective layer (27) is arranged between the shaft (4) and the bearing (23), wherein the insulating protective layer (27) encapsulates the shaft (4) and thermally insulates the bearing (23) from the shaft (4), so that heat from the rotor (3) and from the shaft (4) cannot be passed on to the bearing (23).

2. Electric generator according to Claim 1,
**characterized**
**in that** the slip-ring arrangement (29) is electrically insulated from the shaft (4) by an electrically insulating insulating element (17).

3. Electric generator according to Claim 2,
**characterized**
**in that** the slip rings (13, 14) are connected in an electrically conducting manner to the excitation coil (9) via two electrical conductors (15a, 15b) of the slip-ring arrangement (29), the conductors (15a, 15b) are led within the insulating element (17) along the axis of rotation (5).

4. Electric generator according to Claim 2 or 3,
**characterized**
**in that** the insulating element (17) and the protective layer (27) consist of the same thermally and electrically insulating material and are of one part.

5. Electric generator according to Claim 4,
**characterized**
**in that** the insulating element (17) and the protective layer (27) consist of plastic and are produced by a single plastics injection-moulding operation.

6. Electric generator according to one of Claims 1 to 3,
**characterized**
**in that** the protective layer (17) is a separate protective ring, which is placed onto the shaft (4).

7. Electric generator according to Claims 2 and 6,
**characterized**
**in that** the protective ring is fixed on the insulating element (17) in a material-bonding manner by ultrasonic welding or by friction welding or by press fit.

8. Electric generator according to Claims 2 and 6,
**characterized**
- **in that** the insulating element (17) consists of plastic and is produced by a temporally first plastics injection-moulding operation, and
- **in that** the protective ring consists of plastic and is produced by a second plastics injection-moulding operation and is connected in a material-bonding manner to the insulating element (17).

9. Electric generator according to Claim 1,
**characterized**
**in that** the protective layer (27) consists of a material that has a lower thermal conductivity than the material of the shaft (4).

10. Electric generator according to Claim 1,
**characterized**
**in that** the protective layer (27) consists of a material that has a higher degree of damping than the material of the bearing (23) and/or of the shaft (4), so that vibrations occurring in the shaft (4) and/or in the bearing (23) can be at least partially damped in the protective layer (27) and cannot passed on to the bearing (23) and/or to the shaft (4).

11. Electric generator according to Claim 1,
**characterized**
- **in that** the shaft (4) protrudes out of the rotor (3) at a second shaft end (6b) opposite from the shaft end (6a),
- **in that** a second bearing is non-rotatably fixed on the second shaft end (6b), wherein the shaft (4) with the rotor (3) is mounted rotatably about the axis of rotation (5) within the stator by the second bearing, and
- **in that** a further thermally insulating protective layer (27) is arranged between the shaft (4) and the second bearing, wherein the protective layer (27) encapsulates the shaft (4) and thermally insulates the second bearing from the shaft (4), so that heat from the rotor (3) and from the shaft (4) cannot be passed on to the second bearing.

12. Method for producing the electric generator (1) according to one of Claims 1 to 11,
the electrically insulating insulating element (17) and the thermally insulating protective layer (27) being fixed on the shaft end (6a) of the shaft (4).

13. Method according to Claim 12,
**characterized**
- **in that** the electrically insulating insulating element (17) of plastic is fixed on the shaft end (6a) of the shaft (4), wherein the insulating element (17) was produced in a temporally first plastics injection-moulding operation, and
- **in that** subsequently the thermally insulating protective layer (27) of plastic is fixed on the insulating element (17) in a material-bonding manner by a temporally second plastics injection-moulding operation.

14. Method according to Claim 12,
**characterized**
- **in that** the electrically insulating insulating element (17) of plastic is fixed on the shaft end (6a) of the shaft (4), wherein the insulating element (17) was produced in a temporally first plastics injection-moulding operation, and
- **in that** subsequently the thermally insulating protective layer (27) in the form of a separate protective ring is fixed on the insulating element (17) by ultrasonic welding or by friction welding or by press fit.

15. Method according to Claim 12,
**characterized**
**in that** the electrically insulating insulating element (17) and the thermally insulating protective layer (27) are produced from the same electrically and thermally insulating plastic by a single plastics injection-moulding operation.
